# EUROPEAN PATENT SPECIFICATION

(11) **EP 2 772 682 B1**
(45) Date of publication and mention of the grant of the patent: **16.09.2020**
(21) Application number: 14156777.6
(22) Date of filing: 26.02.2014
(51) Int. Cl.: F21S 41/153, F21S 41/663, F21S 41/675, B60Q 1/08

(54) **Vehicle lamp and vehicle lighting system**
Fahrzeuglampe und Fahrzeugbeleuchtungssystem
Phare de véhicule et système d'éclairage de véhicule

(30) Priority: 27.02.2013 JP 2013037421
(43) Date of publication of application: 03.09.2014
(73) Proprietor: Koito Manufacturing Co., Ltd., Tokyo 108-8711 (JP)
(72) Inventor: KOMATSU, Motohiro, Shizuoka-shi, Shizuoka (JP)
(74) Representative: Gill Jennings & Every LLP

(56) References cited:
- DE-A1- 10 134 594
- DE-A1-102007 052 742
- DE-A1-102008 022 795
- DE-A1-102008 036 193
- DE-A1-102008 044 968
- US-A1- 2002 196 636
- US-A1- 2004 218 401
- US-A1- 2008 239 746
- US-A1- 2009 231 867
- US-A1- 2012 275 173

## Description

### BACKGROUND

### 1. Field

The invention relates to a vehicle lamp for illuminating a predetermined region with high resolution by using a pixel light optical unit, and a vehicle lighting system including the vehicle lamp.

### 2. Related Art

Example of a vehicle lamp using a pixel light optical unit, i.e., an optical unit capable of forming a plurality of light distribution patterns with high resolution are described in JP 2004-210128 A and JP 2011-249184 A. Specifically, JP 2004-210128 A describes a vehicle lamp in which a reflective digital light deflector (DMD: Digital Mirror Device) is used to digitally control on/off of light from a light source by a large number of micro mirror elements, to thereby form a predetermined light distribution pattern. JP 2011-249184 A describes a vehicle lamp in which a liquid crystal shutter (LCD: Liquid Crystal Display) is used to control on/off of light from a light source by changing directions of liquid crystal molecules, to thereby form a predetermined light distribution pattern. Hereinafter, the term "pixel light" is an optical unit capable of changing a light distribution pattern with high resolution and refers to a display device such as a DMD and an LCD.

### SUMMARY

However, in the lamp using the pixel light, it is difficult to obtain luminous intensity required for a vehicle lamp, in particular, luminous intensity required for a high-beam due to constraints on a light-source performance (illuminance) and a device size. In other words, in the lamp configuration as described in JP 2004-210128 A and JP 2011-249184 A, all regions that a vehicle lamp should illuminate are not effectively illuminated. Therefore, an amount of light is insufficient, and such a lamp is not sufficient for mount on an actual product. The patent applications DE-A1-102008036193 and DE-A1-102008044968 each disclose a vehicle headlamp comprising a plurality of lighting modules whereby one module includes a LED-array arranged in a matrix.

The invention has been made in view of the above circumstances in a related art, and may provide a vehicle lamp that is mounted with a high resolution pixel light and that has a lamp configuration capable of securing a sufficient performance as a vehicle lamp, and a vehicle lighting system including the vehicle lamp.
(1) According to one embodiment of the invention, a vehicle lamp includes a high resolution pixel light optical unit and plurality of optical units other than the pixel light optical unit. The pixel light optical unit is configured to illuminate a predetermined region. The optical units are configured to illuminate an upper region, a right region, and a left region of the predetermined region. A low-beam region and a high-beam region are illuminated by combining light of the pixel light optical unit and light of the optical units.
(2) In the vehicle lamp of (1), an upper end of the predetermined region may be in a range of 1° to 5° above a horizontal line (H-H) in a virtual vertical screen. Right and left ends of the predetermined region may be in a range of 5° to 20° from a vertical line in the virtual vertical screen.
(3) In the vehicle lamp of any of (1) and (2), the optical unit may include a high-beam optical unit configured to illuminate a region on or above the predetermined region.
(4) In the vehicle lamp of any of (1) to (3), the pixel light optical unit may have a road surface drawing function.
(5) In the vehicle lamp of any of (1) to (4), the pixel light optical unit may include a digital mirror device or a liquid crystal display.
(6) In the vehicle lamp of any of (1) to (4), the pixel light optical unit may include a digital mirror device and a semiconductor light source. The digital mirror device may have a number of micro mirror elements. The semiconductor light source may be configured to emit light to the digital mirror device.
(7) In the vehicle lamp of (6), the pixel light optical unit may further include a projection lens configured to project the light which is incident on and output by the digital mirror device. The digital mirror device is disposed in rear of a rear focal point of the projection lens.
(8) In the vehicle lamp of any of (6) and (7), the semiconductor light source may include a first semiconductor light source configured to emit red light, a second semiconductor light source configured to emit green light, and a third semiconductor light source configured to emit blue light.
(9) In the vehicle lamp of any of (6) to (8), the micro mirror elements may be controlled independently to draw an indication on a road surface.
(10) In the vehicle lamp of (9), a part of the micro mirror elements of the pixel light optical unit is controlled so that a portion, in the predetermined region, not illuminated by the pixel light optical unit to form the indication.
(11) According to another embodiment of the invention, a vehicle lighting system includes a pair of vehicle head lamps and the vehicle lamp of any of (1) to (10). The pair of vehicle head lamps are configured to be mounted on right and left sides of a front portion of a vehicle. The vehicle lamp including the pixel light optical unit is mounted only in one of the right and left vehicle head lamps.
(12) In the vehicle lighting system of (11), the other of the right and left vehicle head lamps may includes an optical unit having a projection lens, a semiconductor light source, a reflector, and a shade. The semiconductor light source is disposed in rear of a rear focal point of the projection lens and on an optical axis of the projection lens. The semiconductor light source is configured to emit a predetermined amount of light sufficient for a low beam. The reflector is configured to reflect the light emitted from the semiconductor light source toward the projection lens. The shade is configured to shield a part of the light reflected by the reflector and to form a cut-off line on an upper end portion of a low-beam light distribution pattern.

With the above configurations, the lamp has such a configuration that the predetermined region is illuminated by a high resolution pixel light optical unit, other regions that would be short of an amount of light if the pixel light unit were to illuminate it, and light of the pixel light optical unit and light of the optical units are combined to form the low-beam region and the high-beam region. Accordingly, it is possible to provide a vehicle lamp that would be sufficient in the amount of light and that has a sufficient performance as a vehicle lamp.

In particular, the upper end of the predetermined region illuminated by the pixel light optical unit is in a range of 1° to 5° above the horizontal line in the virtual vertical screen. The right and left ends of the predetermined region are in a range of 5° to 20° from the vertical line in the virtual vertical screen. The region on or above the predetermined region is illuminated by the high-beam optical unit. In other words, the pixel light optical unit mainly illuminates the low-beam region, which does not require a high luminous intensity, and the upper, right, and left sides of the low-beam region are illuminated by other optical units. In particular, the upper side of the predetermined region, which requires a higher luminous intensity is illuminated by the high-beam optical unit. The light of the pixel light optical unit and the light of the optical unit are combined to form the low-beam region and the high-beam region. Accordingly, the lamp has a performance sufficient to be mounted to an actual product. It is noted that the horizontal line and the vertical line refer to a horizontal line (H-H line) and a vertical line (V-V line) in a light distribution pattern formed on a virtual vertical screen disposed at a position of 25 m ahead of the lamp.

Further, by utilizing a high resolution pixel light optical unit, it is possible to form, instantaneously and in various manners, a light distribution pattern that does not cause glare to a preceding vehicle, an oncoming vehicle, a pedestrian, and/or the like which are detected by an imaging device or the like. Further, since the pixel light optical unit has the road surface drawing function, it is possible to clearly draw left and right turn indication and/or speed indication on a road surface based on an information signal from a car navigation system or the like. The road surface drawing is desirable since a driver can perform a safe driving without directions of his/her eyes, as compared to a drawing method in which indications are projected on a windshield of a vehicle.

Further the pixel light optical unit may be mounted only in one of the pair of left and right vehicle headlamps mounted in the front portion of the vehicle. In this case, when light distributions of the right and left headlamps are combined, in particular, when an indication is drawn on the road surface, image flickering due to defect in combining of illuminated images does not occur. Accordingly, this is more desirable since visual defect does not occur.

### BRIEF DESCRIPTION OF THE DRAWINGS

Fig. 1 is a front view of a vehicle lamp according to a first embodiment of the invention;
Fig. 2A to 2C are longitudinal section views of the vehicle lamp, Fig. 2A is a section view taken along a line IIA-IIA in Fig. 1, Fig. 2B is a section view taken along a line IIB-IIB in Fig. 1, and Fig. 2C is a section view taken along a line IIC-IIC in Fig. 1;
Fig. 3 is a schematic view of illumination regions of the vehicle lamp;
Fig. 4A shows an example of a light distribution pattern formed by the vehicle lamp;
Fig. 4B shows an example of what is drawn on a road surface by the vehicle lamp; and
Fig. 4C shows another example of what is drawn on the road surface by the vehicle lamp.

### DETAILED DESCRIPTION

### [First Embodiment]

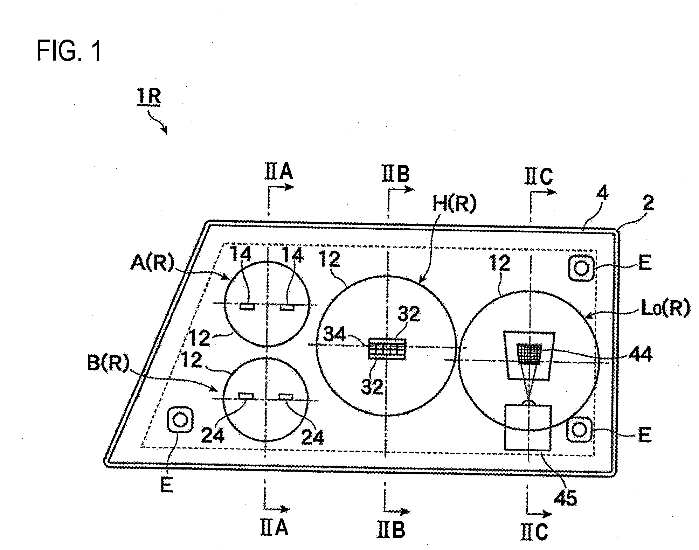

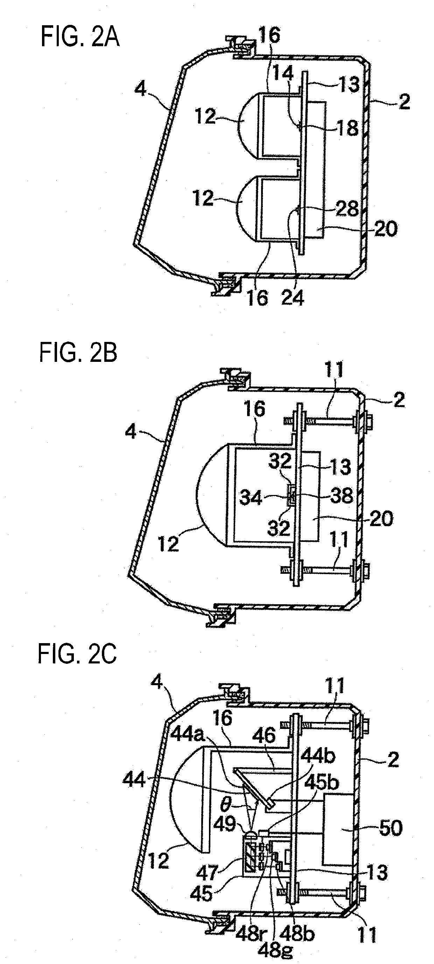

Next, embodiments of the invention will be described with reference to the accompanying drawings. Fig. 1 is a front view of a vehicle lamp according to a first embodiment of the invention. Fig. 2A to 2C are longitudinal section views of the vehicle lamp. Fig. 2A is a section view taken along a line IIA-IIA in Fig. 1. Fig. 2B is a section view taken along a line IIB-IB in Fig. 1. Fig. 2C is a section view taken along a line IIC-IIC in Fig. 1.

Vehicle lamps 1R, 1L correspond to a pair of left and right vehicle headlamps that are mounted on a front portion of a vehicle. Fig. 1 shows the lamp 1R which is disposed in on the right side when viewed from the front side of the vehicle. Fig. 1 shows a perspective view showing projection lenses and light sources that are not viewable as seen from the front side of the lamp due to an extension member (a blindfold board; not shown). Further, alternate long and short dash lines in Fig. 1 and Fig. 2 represent lines passing through focal points of respective projection lenses 12.

The lamp 1R is configured in the following manner. That is, a lamp body 2 and a front cover 4 define a lamp chamber. In the lamp chamber, a lateral high-beam optical unit A(R), a lateral low-beam optical unit B(R), a high-beam optical unit Hi(R), and a low-beam optical unit Lo(R) are accommodated in order from the inside of a vehicle width direction. The lateral high-beam optical unit A(R) is located at an upper left end of the lamp chamber. The lateral low-beam optical unit B(R) is located below the lateral high-beam optical unit A(R). The high-beam optical unit Hi(R) is located at a center of the lamp chamber. The low-beam optical unit Lo(R) is located at a right end of the lamp chamber.

The lateral high-beam optical unit A(R) mainly includes the projection lens 12 and a white LED 14 as a light source. The while LED 14 is disposed on an optical axis Ax of the projection lens 12 and in rear of a rear focal point of the projection lens 12. The projection lens 12 is a plano-convex aspherical lens having a convex surface on its front side surface and a planar surface on its rear side. The projection lens 12 is fixed to and held by a metallic support member 13 through a lens holder 16 at upper and lower peripheral edges thereof. The projection lens 12 projects an inverted image of a light source image formed on a rear focal plane thereof, onto a virtual vertical screen ahead of the lamp. The LED 14 is disposed on the support member 13 via an electronic board 18 thereof at a position where a light emitting surface of a light emitting chip intersects the optical axis Ax.

The lateral low-beam optical unit B(R) mainly includes the projection lens 12 and a light emitting part 24 as a light source. The light emitting part 24 is disposed on the optical axis Ax of the projection lens 12 and in rear of the rear focal point of the projection lens 12. In the light emitting part 24, the light emitting part 24 realizes white light by a combination of an ultraviolet light-emitting element that emits ultraviolet light, a first phosphor that absorbs the ultraviolet light and converts the ultraviolet light into blue light, and a second phosphor that absorbs the ultraviolet light and converts the ultraviolet light into yellow light. The projection lens 12 is fixed to and held by the support member 13 through the lens holder 16 in the same manner as described above. The light emitting part 24 is also disposed on the support member 13 via an electronic board 28 thereof.

The high-beam optical unit Hi(R) mainly includes the projection lens 12, an LED array 34 as a light source, and sub-reflectors 32, 32. The LED array 34 is disposed on the optical axis Ax of the projection lens 12 and in rear of the rear focal point of the projection lens 12. In the LED array 34, a plurality of LED chips are arrayed. The sub-reflectors 32, 32 are configured to diffuse light from the LED array 34 in a vertical direction. The projection lens 12 is fixed to the support member 13 by the lens holder 16 in the same manner as described above. The LED array 34 is also disposed on the support member 13 via an electronic board 38 thereof. In this embodiment, it is assumed that two rows of five LED chips are arranged in the LED array 24. It should be noted that this is just an example.

The sub-reflectors 32, 32 are disposed one above the other and in parallel with a direction in which the LED array 34 extends. The sub-reflectors 32, 32 are fixed to and held by the support member 13 at lower end portions thereof so that substantially-half dome shapes thereof cover the LED array 34. Reflective surfaces of the sub-reflectors 32, 32 are subjected to a surface aluminum deposition process and formed so that light reflected by the reflective surfaces is diffused forwardly of the lens.

The low-beam optical unit Lo(R) mainly includes the projection lens 12, a pixel light 44, and a laser light source 45 as an example of a light source for the pixel light 44. The projection lens 12 is fixed to and held by the support member 13 through the lens holder 16 at an upper peripheral edge thereof. The laser light source 45 is disposed below the pixel light 44 and fixed to the support member 13.

As the pixel light 44, DMD (Digital Mirror Device, see JP H08-201708 A) is used as an example. The DMD mainly includes a driving substrate, a conductor disposed on the driving substrate, a movable part disposed on the conductor, and a large number of micro mirror elements supported by the movable part so as to be tiltable.

The laser light source 45 includes a red laser diode 48r, a green laser diode 48g, a blue laser diode 48b, a dichroic mirror 47 that reflects the emitted light (horizontal light) from these laser diodes 48r, 48g, 48b in a direction of the pixel light 44, and a condenser lens 49 that condenses and diffuses the reflected light from the dichroic mirror 47.

Meanwhile, the pixel light 44 is fixed to and held by the support member 13 through a fixing holder 46 in rear of a rear focal point of the projection lens 12 and at a position where a light emitting surface 44a of the pixel light 44 is in an illumination range θ of the condenser lens 49 and where an angle between the light emitting surface 44a and the optical axis AX of the projection lens 12 is equal to such a predetermined angle that the light emitting surface 44a can efficiently emit the light illuminated thereon, forward of the lamp.

Further, the lamp 1R configured as described above includes a leveling mechanism E. The support member 13 is supported by the lamp body 2 at an upper right end, a lower right end, and a lower left end thereof, as seen from the front side of the lamp, by aiming screws 11, an actuator (not shown) or the like, so that the support member 13 can be adjusted to be tiltable with respect to the lamp body 2 in a vertical direction and a lateral direction. Thereby, the optical units A(R), B(R), Lo(R), Hi(R) are configured as an optical unit with variable light distribution.

Further, a radiation fin 20 is integrally formed on a rear surface of the support member 13 in which the optical units A(R), B(R), Hi(R) using the LEDs as the light sources are located. The radiation fin 20 is configured to radiate heat from each LED.

Also, electronic boards 44b, 45b are electrically conductive to the pixel light 44 and the laser light source 45, respectively. The electronic board 38 is electrically conductive to the LED array 34. The electronic boards 44b, 45b and the electronic board 38 are connected to a control unit 50. The control unit 50 is controlled based on information signals from vehicle information acquiring devices including an imaging device (not shown) such as a camera, a car navigation system (not shown), and a millimeter wave radar (not shown), a laser radar (not shown), and the like. The control unit 50 detects presence of a pedestrian 62, a preceding vehicle 64, an oncoming vehicle 66 and/or the like and vehicle position information or the like based on the information signals and controls a part of the LED chips of the LED array 34 and/or a part of the mirror elements of the pixel light 44 to be turned off based on the detection result. The control unit 50 is disposed at a predetermined position in the lamp chamber and fixed to the lamp body 2.

The lamp 1L has the same lamp configuration as the lamp 1R in a bilaterally symmetric manner, as seen from the front side of a vehicle. In the lamp 1L, a lateral high-beam optical unit A(L), a lateral low-beam optical unit B(L), a high-beam optical unit Hi(L), and a low-beam optical unit Lo(L) are accommodated in order from the inside of the vehicle width direction. The lateral high-beam optical unit A(L) is accommodated at an upper right end of the lamp chamber. The lateral low-beam optical unit B(L) is accommodated below the lateral high-beam optical unit A(L). The high-beam optical unit Hi(L) is accommodated aa the center of the lamp chamber. The low-beam optical unit Lo(L) is accommodated at a left end of the lamp chamber. Since the lamp 1L has the same configuration as the lamp 1R in the bilaterally symmetric manner, description on the lamp L will be omitted by referring to the description on the lamp 1R.

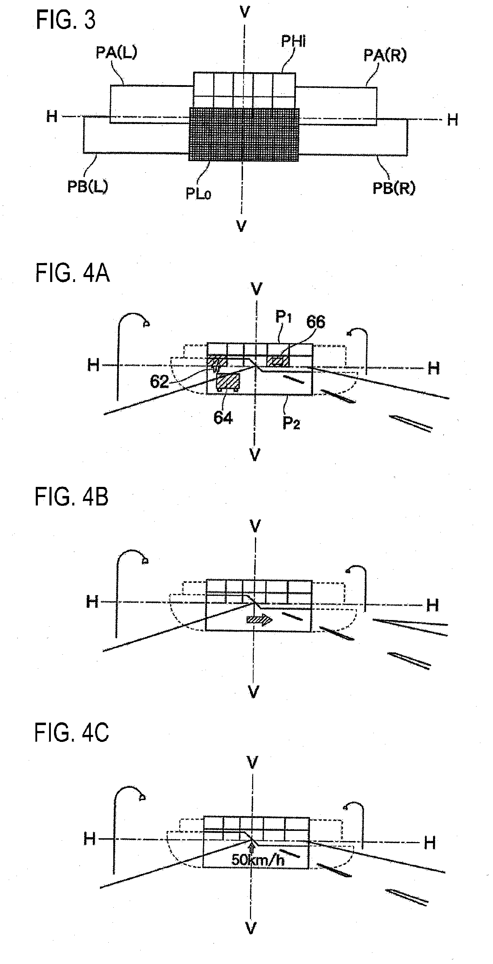

Next, a light distribution image formed by the lamps 1R, 1L configured as described above will be described. Fig. 3 is a schematic view of illumination regions of the lamps 1R, 1L. Specifically, Fig. 3 schematically shows the illumination regions of the respective optical units which are formed by the illumination light from the lamps 1R, 1L on a virtual vertical screen disposed at a position of 25 m ahead of the lamps 1R, 1L.

A reference sign PLo in Fig. 3 indicates a region obtained by combining an illumination region PLo(R) of the low-beam optical unit Lo(R) of the lamp 1R and an illumination region PLo(L) of the low-beam optical unit Lo(L) of the lamp 1L. The region PLo mainly corresponds to a center region including (i) a region below a horizontal line (H-H line) on the virtual vertical screen and (ii) a vertical line (V-V line). That is, the region PL_{O} corresponds to a low-beam region. Further, since the lamps 1R, 1L are provided with the leveling mechanisms E, the illumination region PLo can further illuminate a range of 0.5° to 5° above the H-H line on the virtual vertical screen. For example, an upper end of the illumination region PLo may be in a range of 1° to 5° above the H-H line on the virtual vertical screen. Also, the illumination region PLo can further illuminate a range of 5° to 20° on left and right from the V-V line in order to illuminate a driving lane which an own vehicle travels on and that is visible from a driver's seat. For example, right and left ends of the illumination region PLo may be in a range of 5° to 20° on the left and right of the V-V line on the virtual vertical screen, respectively.

Also, a reference sign PHi indicates a region on or above the illumination region PLo. The region PHi is obtained by combining an illumination region PHi(R) of the high-beam optical unit Hi(R) of the lamp 1R and an illumination region PHi(L) of the high-beam optical unit Hi(L) of the lamp 1L. The region PHi corresponds to a center region (i.e., a high-beam region) that is located above the H-H line and on the virtual vertical screen and contains the V-V line.

Next, a reference sign PB(R) indicates a right region of the illumination region PLo. The region PB(R) is an illumination region of the lateral low-beam optical unit B(R) of the lamp 1R. Also, a reference sign PA(R) indicates a right region of the illumination region PHi. The region PA(R) is an illumination region of the lateral high-beam optical unit A(R) of the lamp 1R. The lateral low-beam optical unit B(R) and the lateral high-beam optical unit A(R) illuminate the right sides of the illumination regions PLo, PHi, as needed. In bilaterally symmetry (V-V line symmetry) with these regions PB(R) and PA(R), a reference sign PB(L) indicates an illumination region of the lateral low-beam optical unit B(L) of the lamp 1L and a reference sign PA(R) indicates an illumination region of the lateral high-beam optical unit A(L) of the lamp 1L. The lateral low-beam optical unit B(L) and the lateral high-beam optical unit A(L) illuminate the left sides of the illumination regions PLo, PHi, as needed. It is noted that in the above description, the upper, left and right regions may overlap the illumination region PLo.

According to this embodiment, a predetermined region, i.e., the low-beam illumination region PLo is illuminated by the low-beam optical units Lo(R), Lo(L) having the pixel lights 44 mounted thereon and other regions that would be short of an amount of light if the pixel light 44 were to illuminate it, i.e., the illumination regions PHi, PB(R), PB(L), PA(R), PA(L) are illuminated by other optical units. In particular, the lamp of this embodiment is configured so that the illumination region PHi (on or above the illumination region PLo) requiring for higher luminous intensity is illuminated by the high-beam optical units Hi(R), Hi(L) which are other high-beam optical units than the low-beam optical units Lo(R), Lo(L) and light of these optical units are combined to form the low-beam region and the high-beam region. Accordingly, the lamp of this embodiment has a performance sufficient to be mounted on an actual product.

Then, light distribution patterns obtained by the lamps 1R, 1L will be described. Fig. 4A shows an example of a light distribution pattern that is obtained by the lamps 1R, 1L. More specifically, the light distribution pattern shown in Fig. 4A is formed on the virtual vertical screen disposed at a position of 25 m ahead of the lamp by the illumination light from the lamps 1R, 1L. Here, a hatched region in Fig. 4A represents that it is not illuminated with light.

As shown in Fig. 4A, in the high-beam region, the lamps 1R, 1L can form a light distribution pattern PI where some regions ahead of the vehicle are not illuminated, at a resolution corresponding to the number of LED chips by turning off a part of the LED chips of the LED array 34 of the high-beam optical units Hi(R), Hi(L). Further, in the low-beam region, the lamps 1R, 1L can form, instantaneously, in various manners and a high resolution, a light distribution pattern P2 where a part of regions ahead of the vehicle are not illuminated, by tilting, to an off direction, a part of the mirror elements of the pixel light 44 of the low-beam optical units Lo(R), Lo(L).

In this way, the lamps 1R, 1L can suppress glare to the pedestrian 62, the preceding vehicle 64, and the oncoming vehicle 66 by turning off the LED chips and/or mirror elements corresponding to the regions where the pedestrian 62, the preceding vehicle 64, and the oncoming vehicle 66 present which are detected by the vehicle information acquiring device(s).

Next, a road surface drawing function of the low-beam optical units Lo(R), Lo(L) provided with the pixel light 44 will be described. Here, the road surface drawing function refers to a function to project a drawing(s), a symbol(s), a character and/or the like on a road surface. Figs. 4B and 4C show examples of what is drawn on a road surface by the lamps.

The low-beam optical units Lo(R), Lo(L) illuminate illumination light including light-source light, having an arbitrary color, of the laser light source 45 or a combination of light-source light onto a predetermined position in the illumination region PLo under control of the control unit 50 which is based on an information signal from a vehicle surrounding information acquiring device. In this way, for example, as shown in Fig. 4B, an indication of a turn direction corresponding to a planned course are drawn on a road surface. Also, as shown in Fig. 4C, an indication of a speed limit or the like that is imposed on a vehicle may be drawn on the road surface. Here, a drawing format (display format) is not limited thereto but may be in any of other various formats.

Thereby, it is possible to support a driver during driving so that he/she can perform a safe driving without changing directions of his/her eyes. Further, it is possible to get the pedestrian 62, the preceding vehicle 64, and the oncoming vehicle 66 to securely recognize a traveling direction of the own vehicle, conditions of the own vehicle, and the like.

### [Second Embodiment]

In a second embodiment, a low-beam optical unit provided with the pixel light 44 according to the first embodiment is mounted only on one lamp of the lamps 1R, 1L of the first embodiment. The other low-beam optical unit is, for example, a projector type LED optical unit instead of the pixel light optical unit. One example of such a configuration may include a projection lens, an LED light source, a reflector, and a shade. The LED light source may be disposed in rear of a rear focal point of the projection lens and on an optical axis of the projection lens. The LED light source can emit a predetermined amount of light sufficient for a low-beam. The reflector may reflect the light emitted from the semiconductor light source toward the projection lens. The reflector may have a aluminum-deposited surface. The shade may shield a part of the light reflected by the reflector. The reflector may be disposed so that an upper end portion thereof is located near the optical axis. The shade may form a cut-off line on an upper end portion of a low-beam light distribution pattern.

According to this embodiment, the optical unit provided the pixel light 44 is mounted only in one of a pair of right and left vehicle headlamps 1R, 1L mounted on the front portion of the vehicle. Therefore, when light distributions of the right and left headlamps 1R, 1L are combined, in particular, when an indication is drawn on the road surface as shown in Figs. 4B and 4C, image flickering due to defect in combining of illuminated images does not occur. Accordingly, this is desirable since visual defect does not occur.

## Claims

1. A vehicle lamp (1R, 1L) comprising:
a high resolution pixel light optical unit (Lo(R), Lo(L)) configured to illuminate a predetermined region (PLo); and
a plurality of optical units (H(R), A(R), B(R), H(L), A(L), B(L)) other than the pixel light optical unit (Lo(R), Lo(L)), the optical units (H(R), A(R), B(R), H(L), A(L), B(L)) configured to illuminate an upper region (PHi) on or above the predetermined region, a right region (PA(R), PB(R)) to the right of the predetermined region, and a left region (PA(L), PB(L)) to the left of the predetermined region (PLo), wherein
a low-beam region (PLo, PB(R), PB(L)) and a high-beam region (PHi, PA(R), PA(L)) are illuminated by combining light of the pixel light optical unit (Lo(R), Lo(L)) and light of the optical units (H(R), A(R), B(R), H(L), A(L), B(L)).

2. The vehicle lamp (1R, 1L) according to claim 1, wherein
an upper end of the predetermined region (PLo) is in a range of 1° to 5° above a horizontal line (H-H) in a virtual vertical screen, and
right and left ends of the predetermined region (PLo) are in a range of 5° to 20° from a vertical line (V-V) in the virtual vertical screen.

3. The vehicle lamp (1R, 1L) according to any one of claims 1 to 2, wherein the optical units (H(R), A(R), B(R), H(L), A(L), B(L)) include a high-beam optical unit (H(R), H(L)) configured to illuminate a region (PHi) on or above the predetermined region (PLo).

4. The vehicle lamp (1R, 1L) according to any one of claims 1 to 3, wherein the pixel light optical unit (Lo(R), Lo(L)) has a road surface drawing function.

5. The vehicle lamp (1R, 1L) according to any one of claims 1 to 4, wherein the pixel light optical unit (Lo(R), Lo(L)) includes a digital mirror device (44) or a liquid crystal display.

6. The vehicle lamp (1R, 1L) according to any one of claims 1 to 4, wherein
the pixel light optical unit (Lo(R), Lo(L)) includes
a digital mirror device (44) having a number of micro mirror elements,
a semiconductor light source (45) configured to emit light to the digital mirror device (44).

7. The vehicle lamp (1R, 1L) according to claim 6, wherein
the pixel light optical unit (Lo(R), Lo(L)) further includes a projection lens (12) configured to project the light which is incident on and output by the digital mirror device (44), and
the digital mirror device (44) is disposed in rear of a rear focal point of the projection lens (12).

8. The vehicle lamp (1R, 1L) according to any one of claims 6 and 7, wherein the semiconductor light source (45) includes a first semiconductor light source (48r) configured to emit red light, a second semiconductor light source (48g) configured to emit green light, and a third semiconductor light source (48b) configured to emit blue light.

9. The vehicle lamp (1R, 1L) according to any one of claims 6 to 8, wherein the micro mirror elements are controlled independently to draw an indication on a road surface.

10. The vehicle lamp (1R, 1L) according to claim 9, wherein a part of the micro mirror elements of the pixel light optical unit (Lo(R), Lo(L)) is controlled so that a portion, in the predetermined region (PLo), not illuminated by the pixel light optical unit (Lo(R), Lo(L)) to form the indication.

11. A vehicle lighting system comprising:
a pair of vehicle head lamps configured to be mounted on right and left sides of a front portion of a vehicle, wherein
the vehicle lamp (1R, 1L), according to any one of claims 1 to 10, including the pixel light optical unit (Lo(R), Lo(L)), is mounted only in one of the right and left vehicle head lamps.

12. The vehicle lighting system according to claim 11, wherein
the other of the right and left vehicle head lamps includes an optical unit having
a projection lens,
a semiconductor light source that is disposed in rear of a rear focal point of the projection lens and on an optical axis of the projection lens, the semiconductor light source configured to emit a predetermined amount of light sufficient for a low beam,
a reflector configured to reflect the light emitted from the semiconductor light source toward the projection lens, and
a shade configured to shield a part of the light reflected by the reflector and to form a cut-off line on an upper end portion of a low-beam light distribution pattern.

## Patentansprüche

1. Fahrzeuglampe (1R, 1L), umfassend:
eine zum Beleuchten eines vorbestimmten Bereichs (PLo) ausgebildete hochauflösende Pixellicht-Optikeinheit (Lo(R), Lo(L)); und
eine Vielzahl von anderen Optikeinheiten (H(R), A(R), B(R), H(L), A(L), B(L)) als die Pixellicht-Optikeinheit (Lo(R), Lo(L)), wobei die Optikeinheiten (H(R), A(R), B(R), H(L), A(L), B(L)) zum Beleuchten eines oberen Bereichs (PHi) auf oder oberhalb des vorbestimmten Bereichs, eines rechten Bereichs (PA(R), PB(R)) rechts vom vorbestimmten Bereich und eines linken Bereichs (PA(L), PB(L)) links vom vorbestimmten Bereich (PLo) ausgebildet sind, wobei
ein Abblendlichtbereich (PLo, PB(R), PB(L)) und ein Fernlichtbereich (PHi, PA(R), PA(L)) durch Kombinieren von Licht der Pixellicht-Optikeinheit (Lo(R), Lo(L)) und Licht der Optikeinheiten (H(R), A(R), B(R), H(L), A(L), B(L)) beleuchtet werden.

2. Fahrzeuglampe (1R, 1L) nach Anspruch 1, wobei
sich ein oberes Ende des vorbestimmten Bereichs (PLo) in einem Bereich 1° bis 5° oberhalb einer horizontalen Linie (H-H) in einem virtuellen vertikalen Bildschirm befindet, und
sich rechtes und linkes Ende des vorbestimmten Bereichs (PLo) in einem Bereich von 5° bis 20° von einer vertikalen Linie (V-V) im virtuellen vertikalen Bildschirm befinden.

3. Fahrzeuglampe (1R, 1L) nach einem der Ansprüche 1 bis 2, wobei die Optikeinheiten (H(R), A(R), B(R), H(L), A(L), B(L)) eine zum Beleuchten eines Bereichs (PHi) auf oder oberhalb des vorbestimmten Bereichs (PLo) ausgebildete Fernlicht-Optikeinheit (H(R), H(L)) umfassen.

4. Fahrzeuglampe (1R, 1L) nach einem der Ansprüche 1 bis 3, wobei die Pixellicht-Optikeineit (Lo(R), Lo(L)) eine Fahrbahn-Zeichenfunktion aufweist.

5. Fahrzeuglampe (1R, 1L) nach einem der Ansprüche 1 bis 4, wobei die Pixellicht-Optikeineit (Lo(R), Lo(L)) eine digitale Spiegelvorrichtung (44) oder einen Flüssigkristallbildschirm umfasst.

6. Fahrzeuglampe (1R, 1L) nach einem der Ansprüche 1 bis 4, wobei die Pixellicht-Optikeinheit (Lo(R), Lo(L)) eine digitale Spiegelvorrichtung (44) mit einer Zahl von Mikrospiegelelementen umfasst, wobei eine Halbleiter-Lichtquelle (45) zum Ausstrahlen von Licht zur digitalen Spiegelvorrichtung (44) ausgebildet ist.

7. Fahrzeuglampe (1R, 1L) nach Anspruch 6, wobei
die Pixellicht-Optikeinheit (Lo(R), Lo(L)) ferner eine zum Projizieren des Lichts, das an der digitalen Spiegelvorrichtung (44) einfällt oder von dieser ausgegeben wird, ausgebildete Projektionslinse (12) umfasst, und
die digitale Spiegelvorrichtung (44) hinter einem hinteren Brennpunkt der Projektionslinie (12) angeordnet ist.

8. Fahrzeuglampe (1R, 1L) nach Anspruch 6 oder 7, wobei die Halbleiter-Lichtquelle (45) eine zum Ausstrahlen von rotem Licht ausgebildete erste Halbleiter-Lichtquelle (48r), eine zum Ausstrahlen von grünem Licht ausgebildete zweite Halbleiter-Lichtquelle (48g) und eine zum Ausstrahlen von blauem Licht ausgebildete dritte Halbleiter-Lichtquelle (48b) umfasst.

9. Fahrzeuglampe (1R, 1L) nach einem der Ansprüche 6 bis 8, wobei die Mikrospiegelelemente unabhängig gesteuert werden, um eine Angabe auf einer Fahrbahn zu zeichnen.

10. Fahrzeuglampe (1R, 1L) nach Anspruch 9, wobei ein Teil der Mikrospiegelelemente der Pixellicht-Optikeinheit (Lo(R), Lo(L)) so gesteuert wird, dass ein Abschnitt im vorbestimmten Bereich (PLo) von der Pixellicht-Optikeinheit (Lo(R), Lo(L)) nicht beleuchtet wird, um die Anzeige zu bilden.

11. Fahrzeug-Beleuchtungssystem, umfassend:
ein Paar von zum Montieren an der rechten und linken Seite einer Frontpartei eines Fahrzeugs ausgebildeten Fahrzeug-Scheinwerfern, wobei
die die Pixellicht-Optikeinheit (Lo(R), Lo(L)) umfassende Fahrzeuglampe (1R, 1L) nach einem der Ansprüche 1 bis 10 nur in einem von rechtem und linkem Fahrzeug-Scheinwerfer montiert ist.

12. Fahrzeug-Beleuchtungssystem nach Anspruch 11, wobei der andere von rechtem und linkem Scheinwerfer eine Optikeinheit mit einer Projektionslinse,
eine Halbleiter-Lichtquelle, die hinter einem hinteren Brennpunkt der Projektionslinse und auf einer optischen Achse der Projektionslinse angeordnet ist, wobei die Halbleiter-Lichtquelle zum Ausstrahlen einer vorbestimmten Menge von Licht, ausreichend für ein Abblendlicht, ausgebildet ist,
einen zum Reflektieren des von der Halbleiter-Lichtquelle zur Projektionslinse ausgestrahlten Lichts ausgebildeten Reflektor, und
einen zum Abschirmen eines Teils des vom Reflektor reflektierten Lichts und zum Bilden einer Hell-Dunkel-Grenze an einem oberen Endabschnitt eines Abblendlicht-Verteilungsmusters ausgebildeten Schirm umfasst.

## Revendications

1. Feu de véhicule (1R, 1L) comprenant :
une unité optique à lumière à élément d'image à haute résolution (Lo(R), Lo(L)) configurée pour illuminer une région prédéterminée (PLo) ; et
une pluralité d'unités optiques (H(R), A(R), B(R), H(L), A(L), B(L)) autres que l'unité optique à lumière à élément d'image (Lo(R), Lo(L)), les unités optiques (H(R), A(R), B(R), H(L), A(L), B(L)) étant configurées pour illuminer une région supérieure (PHi) sur ou au-dessus de la région prédéterminée, une région droite (PA(R), PB(R)) à la droite de la région prédéterminée, et une région gauche (PA(L), PB(L)) à la gauche de la région prédéterminée (PLo), dans lequel
une région de feu de croisement (PLo, PB(R), PB(L)) et une région de feu de route (PHi, PA(R), PA(L)) sont illuminées en combinant de la lumière de l'unité optique à lumière à élément d'image (Lo(R), Lo(L)) et de la lumière des unités optiques (H(R), A(R), B(R), H(L), A(L), B(L)).

2. Feu de véhicule (1R, 1L) selon la revendication 1, dans lequel
une extrémité supérieure de la région prédéterminée (PLo) est dans une plage de 1° à 5° au-dessus d'une ligne horizontale (H-H) dans un écran vertical virtuel, et
des extrémités droite et gauche de la région prédéterminée (PLo) sont dans une plage de 5° à 20° par rapport à une ligne verticale (V-V) dans l'écran vertical virtuel.

3. Feu de véhicule (1R, 1L) selon l'une quelconque des revendications 1 à 2, dans lequel les unités optiques (H(R), A(R), B(R), H(L), A(L), B(L)) comprennent une unité optique de feu de route (H(R), H(L)) configurée pour illuminer une région (PHi) sur ou au-dessus de la région prédéterminée (PLo).

4. Feu de véhicule (1R, 1L) selon l'une quelconque des revendications 1 à 3, dans lequel l'unité optique à lumière à élément d'image (Lo(R), Lo(L)) a une fonction de dessin de surface de route.

5. Feu de véhicule (1R, 1L) selon l'une quelconque des revendications 1 à 4, dans lequel l'unité optique à lumière à élément d'image (Lo(R), Lo(L)) comprend un dispositif de miroir numérique (44) ou un affichage à cristaux liquides.

6. Feu de véhicule (1R, 1L) selon l'une quelconque des revendications 1 à 4, dans lequel
l'unité optique à lumière à élément d'image (Lo(R), Lo(L)) comprend
un dispositif de miroir numérique (44) ayant un nombre d'éléments de micro-miroir,
une source de lumière à semi-conducteur (45) configurée pour émettre de la lumière vers le dispositif de miroir numérique (44).

7. Feu de véhicule (1R, 1L) selon la revendication 6, dans lequel
l'unité optique à lumière à élément d'image (Lo(R), Lo(L)) comprend en outre une lentille de projection (12) configurée pour projeter la lumière qui est incidente sur et délivrée par le dispositif de miroir numérique (44), et
le dispositif de miroir numérique (44) est disposé à l'arrière d'un point focal arrière de la lentille de projection (12).

8. Feu de véhicule (1R, 1L) selon l'une quelconque des revendications 6 et 7, dans lequel la source de lumière à semi-conducteur (45) comprend une première source de lumière à semi-conducteur (48r) configurée pour émettre de la lumière rouge, une deuxième source de lumière à semi-conducteur (48g) configurée pour émettre de la lumière verte, et une troisième source de lumière à semi-conducteur (48b) configurée pour émettre de la lumière bleue.

9. Feu de véhicule (1R, 1L) selon l'une quelconque des revendications 6 à 8, dans lequel les éléments de micro-miroir sont commandés de manière indépendante pour dessiner une indication sur une surface de route.

10. Feu de véhicule (1R, 1L) selon la revendication 9, dans lequel une partie des éléments de micro-miroir de l'unité optique à lumière à élément d'image (Lo(R), Lo(L)) est commandée de telle sorte qu'une partie, dans la région prédéterminée (PLo), n'est pas illuminée par l'unité optique à lumière à élément d'image (Lo(R), Lo(L)) pour former l'indication.

11. Système d'éclairage de véhicule comprenant :
une paire de phares de véhicule configurés pour être montés sur des côtés droit et gauche d'une partie avant d'un véhicule, dans lequel
le feu de véhicule (1R, 1L), selon l'une quelconque des revendications 1 à 10, comprenant l'unité optique à lumière à élément d'image (Lo(R), Lo(L)), est monté seulement dans un des phares droit et gauche de véhicule.

12. Système d'éclairage de véhicule selon la revendication 11, dans lequel l'autre des phares droit et gauche de véhicule comprend une unité optique ayant
une lentille de projection,
une source de lumière à semi-conducteur qui est disposée à l'arrière d'un point focal arrière de la lentille de projection et sur un axe optique de la lentille de projection, la source de lumière à semi-conducteur étant configurée pour émettre une quantité prédéterminée de lumière suffisante pour un feu de croisement,
un réflecteur configuré pour réfléchir la lumière émise depuis la source de lumière à semi-conducteur vers la lentille de projection, et
un masque configuré pour masquer une partie de la lumière réfléchie par le réflecteur et pour former une ligne de coupure sur une partie d'extrémité supérieure d'une configuration de distribution de lumière de feu de croisement.
